# EUROPEAN PATENT APPLICATION

(11) **EP 0 950 683 A1**
(43) Date of publication of application: **20.10.1999**
(21) Application number: 98943006.1
(22) Date of filing: 16.09.1998
(51) Int. Cl.: C08J 9/04, B32B 5/18

(54) **RESIN MATERIAL FOR FOAM MOLDING, FOAMED SHEET OBTAINED THEREFROM, AND PROCESS FOR PRODUCING THE SAME**

(30) Priority: 17.09.1997 JP 25214397
(71) Applicant: Japan Polychem Corporation, Tokyo 100-0006 (JP)
(72) Inventor: EGASHIRA, Akihiko, Japan Polychem Corporation, Yokkaichi-shi, Mie 510-0848 (JP); KATOU, Fusaaki, Japan Polychem Corporation, Yokkaichi-shi, Mie 510-0848 (JP); MATSUNO, Takumi, Japan Polychem Corporation, Yokkaichi-shi, Mie 510-0848 (JP)
(74) Representative: VOSSIUS & PARTNER
(86) International application number: JP9804161
(87) International publication number: WO9914266

(57) **Abstract**

A polyolefin resin material for foam molding which mainly comprises a polyolefin resin and is to be mixed with a blowing agent to provide a foaming compound, which has a melt tension of 5 to 20 g at 190°C and a viscosity ratio of dynamic melt viscoelasticity at a circular frequency of 0.01 rad/s [η(0.01)] to dynamic melt viscoelasticity at a circular frequency of 100 rad/s [η(100)], i.e., η(0.01)/η(100), of 50 or more. A foamed sheet prepared therefrom is excellent in closed-cell properties and extrudability, light in weight, and highly rigid.

## Description

### Technical Field:

This invention relates to a polyolefin resin material for foam molding which is capable of providing a light and high-rigidity foamed sheet having an excellent closed-cell structure, a foamed sheet prepared therefrom, and a process for producing the resin material.

### Background Art:

Light in weight and excellent in heat resistance and impact resistance, polyolefin foamed sheets are widely used as a foam core of automotive interior trim, constructional materials, stationery, food containers, and the like. The foamed sheets are obtained by kneading a blowing agent of various kinds into a molten polyolefin resin under pressure in an extruder, followed by foam extrusion through a die attached to the extruder head under atmospheric pressure. Especially, in producing a foamed sheet having a relatively high expansion ratio, e.g., 1.8 or higher, an increased amount of a blowing agent is used to increase the expansion ratio.

However, use of an increased amount of a blowing agent results in an increase of the partial pressure of gas generated by the blowing agent, and it is difficult for the molten resin to hold the gas. It tends to follow that the individual cells burst to become open cells. An increased proportion of open cells leads to reductions in heat resistance or mechanical strength, such as impact resistance and rigidity, of the resulting foamed sheet.

To increase the melt tension of the resin material for enhancing gas holding properties is a conceivable approach for obtaining a foamed sheet with reduced open cells, i.e., excellent in closed cell-forming properties, and various means have been proposed along this line.

However, while having improved gas holding properties, a resin having a higher melt tension exhibits a high shear viscosity in an extruder. This increases the load on the extruder for maintaining equal productivity and reduces extrusion molding properties. At the same time, shear heating in the extruder increases to raise the resin temperature and decrease the viscosity. As a result, the melt tension of the resin diminishes at the time of foaming after all.

Further, it has been difficult to obtain a single-layer foamed sheet while achieving both lightness in weight and high rigidity that are conflicting to each other.

The present invention has been completed under these circumstances. Accordingly it is an object of the invention to provide a resin material which exhibits excellent closed cell-forming properties and extrusion molding properties and provides a light and yet high-rigidity polyolefin resin foamed sheet, a single-layer or laminated foamed sheet comprising the same, and a process for producing the single-layer or laminated foamed sheet. Disclosure of the Invention:

As a result of extensive investigation, the inventors of the present invention have found that the above object is accomplished by using a specific polyolefin resin material having a high melt tension and high non-Newtonian properties and thus completed the present invention.

The polyolefin resin material for foam molding according to the invention is a material which mainly comprises a polyolefin resin and is to be mixed with a blowing agent to provide a foam molding material, which is characterized by having a melt tension of 5 g to 20 g at 190°C and a viscosity ratio of dynamic melt viscoelasticity at a circular frequency of 0.01 rad/s [η(0.01)] to dynamic melt viscoelasticity at a circular frequency of 100 rad/s [η(100)], i.e., η(0.01)/η(100), of 50 or more.

The foamed sheet of the invention is characterized by comprising a polyolefin resin material having a melt tension of 5 g to 20 g at 190°C and a viscosity ratio of dynamic melt viscoelasticity at a circular frequency of 0.01 rad/s [η(0.01)] to dynamic melt viscoelasticity at a circular frequency of 100 rad/s [η(100)], i.e., η(0.01)/η(100), of 50 or more.

The laminated foamed sheet of the invention is a laminated sheet having a foamed layer and a non-foamed layer that is in contact with the foamed layer, which is characterized in that the foamed layer comprises a polyolefin resin material having a melt tension of 5 g to 20 g at 190°C and a viscosity ratio of dynamic melt viscoelasticity at a circular frequency of 0.01 rad/s [η(0.01)] to dynamic melt viscoelasticity at a circular frequency of 100 rad/s [η(100)], i.e., η(0.01)/η(100), of 50 or more.

The process for producing a foamed sheet according to the present invention is characterized by comprising mixing the above-described polyolefin resin material for foam molding and a blowing agent and melt extruding the mixture through a die into sheeting.

The process for producing a laminated foamed sheet according to the present invention is a process for producing a laminated foamed sheet having a foamed layer and a non-foamed layer that is in contact with the foamed layer, which is characterized by comprising the step of melt extruding (a) a mixture comprising the above-described polyolefin resin material for foam molding and a blowing agent and (b) a non-foaming resin material mainly comprising a polyolefin resin and not containing a blowing agent or (c) a non-foaming resin layer composed of a non-polyolefin resin layer and a resin layer which is to adhere the non-polyolefin resin layer and the foamed layer and not containing a blowing agent from a die into sheeting to form the foamed layer and the non-foamed layer in contact with the foamed layer.

### Best Mode for Carrying out the Invention:

The practical mode of the present invention will hereinafter be described.

### (1) Polyolefin Resin Material for Foam Molding

The polyolefin resin material for foam molding of the invention mainly comprises a polyolefin resin (hereinafter sometimes referred to as a polyolefin resin for foam molding) and has a melt tension of 5 g to 20 g, preferably 10 g to 15 g, and a viscosity ratio of dynamic melt viscoelasticity at a circular frequency of 0.01 rad/s [η(0.01)] to dynamic melt viscoelasticity at a circular frequency of 100 rad/s [η(100)], i.e., η(0.01)/η(100), of 50 or more, preferably 70 or more.

If the melt tension is less than 5 g, the resin has weak cell retaining properties so that the cells burst to cause an escape of gas, resulting in a failure to obtain foam having uniform and fine cells at a relatively high expansion ratio (e.g., 1.8 or higher). On the other hand, a melt tension greater than 20 g is so great as to suppress foaming.

If η(0.01)/η(100) is less than 50, molding is hindered for the following reasons. As stated previously, a material with such a high melt tension as falls within the above range has an increased shear viscosity in an extruder to impose an increased load on the extruder, which not only deteriorates extrusion moldability but raises the resin temperature due to great shear heating. The melt tension decreases as a result. A reduction in shear viscosity in an extruder for improving extrusion moldability is accompanied by deterioration of cell retention because the melt tension is lowered than the above range, with η(0.01)/η(100) being less than 50.

In other words, at η(0.01)/η(100) of 50 or greater it is possible to reduce the shear viscosity without accompanying a reduction in melt tension. This is because of the correspondence of the melt viscosity ratio to molecular weight distribution. η(0.01)/η(100) of 50 or greater means, in other words, broad molecular weight distribution.

Methods for measuring melt tension and dynamic melt viscoelasticity are as follows.

### 1) Melt Tension

Equipment: Capillograph manufactured by Toyo Seiki K.K.
Temperature: 190°C
Orifice: L/D=8.0/2.1 (mm)
Extrusion speed: 10 mm/min
Haul-off speed: 4 m/min

### 2) Dynamic Melt Viscoelasticity

Equipment: Mechanical Spectrometer RMS800, manufactured by Rheometrics Co.
Temperature: 210°C
Fixture: parallel plates of 25 mm in diameter
Measurement mode: frequency sweep
Gap: 1.5 mm
Frequency: 0.01 to 100 rad/s
Strain: 10%

While the polyolefin resin material for foam molding of the invention typically includes a polyolefin resin which *per se* possesses the above-descried melt characteristics as a main component, it is not always required for the polyolefin resin itself to have the above melt characteristics. That is, the polyolefin resin material for foam molding may be a mixture prepared by mixing a specific component into a polyolefin resin which does not have the above melt characteristics so as to satisfy the melt characteristics requirement.

The polyolefin resin for foam molding which can be used as a main component and has the above melt characteristics includes resins of the type that has a broad molecular weight distribution with a shoulder in the high molecular weight side, slightly crosslinkable resins, and long-chain branched type resins. Such types of polyolefin resins can be any of low-density polyethylene, middle-density polyethylene, high-density polyethylene, linear low-density polyethylene, polypropylene, ethylene-propylene copolymers, copolymers of ethylene or propylene and other α-olefins, copolymers of ethylene and vinyl acetate, acrylic acid, acrylic esters, methacrylic acid, methacrylic esters, vinyl alcohol, etc., and mixtures thereof. Examples of the α-olefin include butene-1, pentene-1, hexene-1, and 4-methylpentene-1. The copolymers may be either random copolymers or block copolymers.

The above-described polyolefin resins for foam molding preferably have a melt index (JIS-K6758; 230°C, 2.16 kg load) of 0.1 to 10 g/10 min. While not limiting, the density of the polyolefin resins for foam molding is preferably from 0.90 to 0.95 g/cm³.

If desired, the polyolefin resin for foam molding may appropriately contain various fillers, antioxidants, weathering agents, light shielding agents, anti-heat aging agents, antistatics, nucleating agents, plasticizers, flame retardants, colorants, slip agents (e.g., fatty acid metal salts and fatty acid amides),extruded residue preventing agents, and the like.

In order to greatly improve foaming characteristics such as gas holding properties and closed cell-forming properties, in particular, it is preferred to use fibrous fillers, especially fillers mainly comprising polytetrafluoroethylene (hereinafter referred to as polytetrafluoroethylene fillers). Polytetrafluoroethylene is fibrillated by the shearing in an extruder to form entanglement of fibers.

Polytetrafluoroethylene in the polytetrafluoroethylene filler preferably has a molecular weight of 500,000 to 20,000,000. Polytetrafluoroethylene having a smaller molecular weight than 500,000 produces small effects in improving foaming characteristics, and one having a greater molecular weight than 20,000,000 tends to make extrusion difficult.

The polytetrafluoroethylene filler is preferably used in an amount of 0.01 to 20 parts by weight, in terms of pure polytetrafluoroethylene, per 100 parts by weight of the polyolefin resin for foam molding. In amounts less than 0.01 part by weight in terms of pure polytetrafluoroethylene, the effects in improving foaming characteristics are small. Addition of more than 20 parts by weight tends to make extrusion difficult.

Where a resin which does not have the above-described melt characteristics is used as a polyolefin resin for foam molding, it can be endowed with desired melt characteristics by compounding with a proper amount of polytetrafluoroethylene. That is, a polyolefin resin whose melt tension is less than 5 g can be made into a resin material exhibiting the above melt characteristics by compounding with polytetrafluoroethylene only if it has a melt tension of 1 g or more. In this case, addition of about 0.01 to 20 parts by weight of a polytetrafluoroethylene filler per 100 parts by weight of such a polyolefin resin for foam molding provides a resin material satisfying the above-described melt characteristics requirements.

The polyolefin resin material for foam molding according to the invention is mixed with a blowing agent for use as a foaming material which can provide foamed articles excellent in closed cell-forming properties, light in weight, and highly rigid, especially melt-extruded sheeting. The polyolefin resin material for foam molding of the invention is also applicable to bead-expanded articles.

### (2) Foamed Sheet

The polyolefin resin material for foam molding according to the present invention is used for molding a foamed sheet. That is, the foamed sheet of the invention comprises the above-mentioned polyolefin resin material for foam molding.

The expansion ratio of the foamed sheet is preferably 2.0 to 6.0. Molding by use of the polyolefin resin material for foam molding of the invention makes it possible to increase an expansion ratio while maintaining closed cell-forming properties. The foamed sheet preferably has a thickness of 0.3 to 3.0 mm.

While the foamed sheet can be produced by any known methods, a preferred method is characterized by comprising mixing the polyolefin resin material for foam molding with a blowing agent and melt extruding the mixture through a die into sheeting.

The blowing agent which can be used in the invention include chemical blowing agents that generate gas on thermal decomposition and physical blowing agents that are gasified under heat and pressure control. Examples of the chemical blowing agents are azodicarbonamide, azobisisobutyronitrile, diazoaminobenzene, N,N'-dinitrosopentamethylenetetramine, N,N'-dimethyl-N,N'-dinitroterephthalamide, benzenesulfonyl hydrazide, p-toluenesulfonylhydrazide, p,p'-oxybisbenzenesulfonyl hydrazide, benzenesulfonyl carbazide, carbonates, e.g., sodium hydrogencarbonate, and organic acid salts, e.g., sodium citrate. Examples of the physical blowing agents are propane, butane, pentane, dichlorodifluoromethane, dichloromonofluoromethane, trichloromonofluoromethane, methanol, ethanol, and water. These blowing agents can be used either individually or as a mixture of two or more thereof.

The blowing agent is preferably used in an amount of 1.0 to 5.0 parts by weight per 100 parts by weight of the polyolefin resin material for foam molding. By using the resin material of the invention, satisfactory closed cell-forming properties can be retained even though the blowing agent is used in an increased amount. The above-mentioned blowing agents can be used in combination with customarily employed foaming assistants, foaming nucleating agents, crosslinking agents, and so forth.

The method for kneading the polyolefin resin material for foam molding and the blowing agent is not particularly restricted. They are kneaded appropriately in a known manner and extruded through a die. The melting temperature and the resin temperature can be selected from the conditions used in general sheet foaming.

The foamed sheet of the invention thus obtained, which is made up of the above-mentioned polyolefin resin material for foam molding, may further contain a slight amount of the blowing agent remaining unused during molding.

### (3) Laminated Foamed Sheet

In order to enhance rigidity, heat resistance and the like of the whole sheet effectively, a laminated foamed sheet having a foamed layer and a non-foamed layer is preferably provided. That is, the laminated foamed sheet according to the present invention is a laminated foamed sheet having a foamed layer and a non-foamed layer that is in contact with the foamed layer, wherein the foamed layer comprises the above-described polyolefin resin for foam molding.

While not particularly limited in material, functional materials constituting the non-foamed layer (hereinafter sometimes referred to as a non-foaming resin material) preferably comprise a polyolefin resin (hereinafter sometimes referred to as a polyolefin resin for non-foam molding). More specifically, a polyolefin resin for non-foam molding is selected similarly to the polyolefin resin for foam molding used in the polyolefin resin material of the invention from among low-density polyethylene, middle-density polyethylene, high-density polyethylene, linear low-density polyethylene, polypropylene, ethylene-propylene copolymers, copolymers of ethylene or propylene and other α-olefins, copolymers of ethylene and vinyl acetate, acrylic acid, acrylic esters, methacrylic acid, methacrylic esters, vinyl alcohol, etc., and mixtures thereof. The copolymers may be either random copolymers or block copolymers. The non-foaming polyolefin resin may be the same as or different from the resin material constituting the foamed layer. The non-foamed layer may be a non-polyolefin resin layer, which is laminated, if desired, together with a resin layer adhesive to a polyolefin. In this case, the above-described polyolefin resin materials for non-foaming can be laminated in combination.

A resin composition comprising the polyolefin resin for non-foam molding and a filler is particularly preferred as a non-foaming resin material.

In the practice of the present invention, the filler is effective in not only controlling the foaming state, improving the rigidity and heat resistance of the foamed sheet, and suppressing heat of combustion in incineration but in producing sheeting with little variation in surface smoothness and thickness, preventing a foamed sheet extruded from a die from being corrugated due to expansion.

The filler in the non-foamed layer is used in an amount of 5 to 400 parts by weight, particularly 10 to 100 parts by weight, per 100 parts by weight of the polyolefin resin for non-foam molding. Addition of less than 5 parts hardly produces the effect in improving the rigidity and heat resistance of the foamed sheet as a whole. Addition of more than 400 parts tends to make extrusion molding difficult.

Examples of the fillers include inorganic powders, such as natural fillers, e.g., silica, talc, mica, and clay, calcium carbonate, magnesium carbonate, hydroxides, e.g., calcium hydroxide, silicates, e.g., sodium silicate and calcium silicate, oxides, e.g., titanium oxide, iron oxide, zinc oxide, magnesium oxide, alumina, and zeolite, salts, e.g., aluminum phosphate and barium sulfate, carbon black, and graphite; organic powders, such as phenol resin powder and ebonite powder; and fibrous fillers, e.g., glass of various kinds, pulp, asbestos, polyethylene terephthalate, polytetrafluoroethylene, and polyamide. These fillers can be used individually or as a mixture of two or more thereof.

The layer structure of the laminated foamed sheet is not particularly limited as long as it has two or more layers comprising a foamed layer and a non-foamed layer in contact with the foamed layer. A three-layered structure composed of a foamed layer having on each side thereof a non-foamed layer is preferred. If desired, a skin layer comprising a resin material selected from the similar polyolefin resins to those used in the non-foamed layer may be laminated on one or both of the outer non-foamed layers. The layer structure can be chosen in conformity with required quality, such as gloss, decorative finish, stain resistance, heat sealability, and the like.

The thickness ratio of the non-foamed layer to the total thickness is preferably 10 to 15%, still preferably 20 to 30%. A non-foamed layer having a thickness ratio smaller than 10% has small effects in controlling the foaming state, improving the rigidity and heat resistance of the foamed sheet, suppressing heat of combustion, and preventing corrugation caused by volume expansion. Where the thickness ratio of the non-foamed layer is 50% or greater, it is difficult to enjoy the advantage of lightness.

A preferred process for producing the laminated foamed sheet of the invention is characterized by comprising the step of melt co-extruding (a) a mixture of the above-described polyolefin resin material for foam molding and a blowing agent and (b) a non-foaming resin material containing no blowing agent from a die into sheeting to form a foamed layer and a non-foamed layer in contact with the foamed layer. According to this process a laminated foamed sheet of the invention can be obtained with ease at a lower cost with a space saving.

Laminating a non-foamed layer on a foamed layer can be carried out in any manner in which resin materials constituting the individual layers are laminated in a molten state before they are extruded from a die. In general, lamination can be carried out in a multi-manifold system in which the materials having been melt kneaded in the respective extruders are laminated in a die, a feed block system (combining adapter system) in which the materials are laminated before entering a die, and the like.

Where the above-described skin layer is further laminated according to necessity, it is laminated by generally employed lamination methods, such as dry lamination, wet lamination, extrusion lamination, co-extrusion, and pressing.

Preferred embodiments in carrying out the present invention are as follows.
1. A polyolefin resin material for foam molding which mainly comprises a polyolefin resin and is to be mixed with a blowing agent to provide a foaming material, which is characterized by having a melt tension of 5 g to 20 g at 190°C and a viscosity ratio of dynamic melt viscoelasticity at a circular frequency of 0.01 rad/s [η(0.01)] to dynamic melt viscoelasticity at a circular frequency of 100 rad/s [η(100)], i.e., η(0.01)/η(100), of 50 or more.
2. The polyolefin resin material for foam molding according to embodiment 1, which mainly comprises homopolypropylene or a propylene-ethylene block copolymer.
3. The polyolefin resin material for foam molding according to embodiment 1, which further comprises polytetrafluoroethylene.
4. The polyolefin resin material for foam molding according to embodiment 1, which comprises a polyolefin resin material having a melt tension of 1 g to 20 g at 190°C and polytetrafluoroethylene.
5. A foamed sheet characterized by comprising a polyolefin resin material which has a melt tension of 5 g to 20 g at 190°C and a viscosity ratio of dynamic melt viscoelasticity at a circular frequency of 0.01 rad/s [η(0.01)] to dynamic melt viscoelasticity at a circular frequency of 100 rad/s [η(100)], i.e., η(0.01)/η(100), of 50 or more.
6. A laminated foamed sheet having a foamed layer and a non-foamed layer in contact with the foamed layer, characterized in that the foamed layer comprises a polyolefin resin material which has a melt tension of 5 g to 20 g at 190°C and a viscosity ratio of dynamic melt viscoelasticity at a circular frequency of 0.01 rad/s [p(0.01)] to dynamic melt viscoelasticity at a circular frequency of 100 rad/s [η(100)], i.e., η(0.01)/η(100), of 50 or more.
7. The laminated foamed sheet according to embodiment 6, wherein the polyolefin resin material comprises a polyolefin resin and a polytetrafluoroethylene filler.
8. The laminated foamed sheet according to embodiment 6, wherein the non-foamed layer is made of a non-foaming resin material comprising a polyolefin resin and a filler.
9. The laminated foamed sheet according to embodiment 6, wherein the non-foamed layer is a resin layer having a non-polyolefin resin layer and an adhesive resin layer provided in between the non-polyolefin resin layer and the foamed layer for the purpose of adhesion.
10. A laminated foamed sheet according to embodiment 9, which has a non-foamed layer having the structure according to embodiment 9 on one side thereof and a non-foamed layer comprising a polyolefin resin on the other side.
11. The laminated foamed sheet according to embodiment 9, wherein the non-foamed layer further has a polyolefin resin layer on the outer side of the non-polyolefin resin layer and/or between the non-polyolefin resin layer and the foamed layer via an adhesive resin.
12. The laminated foamed sheet according to embodiment 8, wherein the polyolefin resin material comprises a resin having gas barrier properties and an adhesive resin.
13. A process for producing a foamed sheet characterized by comprising mixing the polyolefin resin material for foam molding according to any one of embodiments 1 to 4 and a blowing agent and melt extruding the mixture from a die into sheeting.
14. A process for producing a laminated foamed sheet having a foamed layer and a non-foamed layer in contact with the foamed layer, which comprises the step of melt extruding (a) a mixture comprising the polyolefin resin material for foam molding according to any one of embodiments 1 to 4 and a blowing agent and (b) a non-foaming resin material mainly comprising a polyolefin resin and not containing a blowing agent from a die into sheeting to form the foamed layer and the non-foamed layer in contact with the foamed layer.
15. The process for producing a laminated foamed sheet according to embodiment 14, wherein the non-foaming resin material comprises the polyolefin resin and a filler.
16. A process for producing a laminated foamed sheet having a foamed layer and a non-foamed layer in contact with the foamed layer, which comprises the step of melt extruding (a) a mixture comprising the polyolefin resin material for foam molding according to embodiment 1 and a blowing agent and (c) a non-foaming resin material mainly comprising a non-polyolefin resin and containing no blowing agent from a die into sheeting with an adhesive resin layer which adheres the two materials being laminated therebetween to form the foamed layer and the non-foamed layer in contact with the foamed layer.

The present invention will now be illustrated in greater detail with reference to Examples, but the present invention is not deemed to be limited thereto.

### EXAMPLE 1

A hundred parts by weight of a propylene-ethylene block copolymer (Novatec Polypro EC7, produced by Japan Polychem Corporation; melt index: 1.5 g/10 min) as a polyolefin resin and 1.5 parts by weight of a 1:1 mixture of monosodium citrate and sodium hydrogencarbonate as a blowing agent were mixed to prepare a blowing agent-containing polyolefin resin (a layer prepared therefrom is referred to as a foamed layer in Table 1 below). The resin material was melt kneaded in an extruder having a diameter of 65, extruded from a T die having a width of 750 mm, and cooled through three metallic polishing rolls each having a diameter of 300 mm set at a position 350 mm away from the die outlet to obtain a single-layer foamed sheet.

### EXAMPLE 2

A sheet was obtained in the same manner as in Example 1, except that the polyolefin resin of the blowing agent-containing polyolefin resin material was replaced with a homopolypropylene (PF814, produced by Himont Co.; melt index: 3.0 g/10 min).

### EXAMPLE 3

A sheet was obtained in the same manner as in Example 1, except that the resin of the blowing agent-containing polyolefin resin was replaced with homopolypropylene (Novatec Polypro FY4, produced by Japan Polychem Corporation; melt index: 5.0 g/10 min) and that 0.3 part by weight of a polytetrafluoroethylene filler (a mixture consisting of 40 wt% of polytetrafluoroethylene having a molecular weight of 1,000,000, 30 wt% of polymethyl methacrylate, and 30 wt% of polydodecyl methacrylate) was additionally mixed with the resin.

### EXAMPLE 4

A sixty parts by weight of a propylene-ethylene block copolymer (Novatec Polypro EC9, produced by Japan Polychem Corporation; melt index: 0.5 g/10 min) as a polyolefin resin and 40 parts by weight of talc as a filler were mixed to prepare a filler-containing polyolefin resin material (a layer prepared therefrom is referred to as a non-foamed layer 1 in Table 1). The resulting resin material and the same blowing agent-containing polyolefin resin as used in Example 3 were melt kneaded in respective extruders having a diameter of 90 and 65, respectively.

The molten mixtures were laminated by a feed block system immediately before entering a T die to form three layers with the latter as an intermediate layer. Homopolypropylene (Novatec Polypro FY6C, produced by Japan Polychem Corporation; melt index: 2.4 g/10 min) (a layer prepared therefrom is referred to as a non-foamed layer 2 in Table 1) was extruded from an extruder having a diameter of 40 and laminated as a skin layer on each side of the above 3-layered laminate in a feed block. The thus formed 5-layered laminate made up of 3 kinds of materials was extruded through a T die having a width of 750 mm to obtain a foamed sheet in the same manner as in Example 3.

### EXAMPLE 5

A foamed sheet was obtained in the same manner as in Example 4, except for using 2.5 parts by weight of azodicarbonamide as a blowing agent.

### EXAMPLE 6

A polyolefin adhesive resin (Modic AP P513V, produced by Mitsubishi Chemical Co., Ltd.; a layer prepared therefrom is referred to as a non-foamed layer 3 in Table 1) and the same blowing agent-containing polyolefin resin as prepared in Example 3 were melt kneaded in respective extruders both having a diameter of 40 and laminated by a feed block system. An ethylene-vinyl alcohol copolymer (Eval EP-J102B, produced by Kuraray Co., Ltd.; a layer prepared therefrom is referred to as a non-foamed layer 4 in Table 1) was melt kneaded and extruded from an extruder having a diameter of 40 and laminated on the polyolefin adhesive resin layer side of the above-described laminate in a feed block. The thus formed 3-layered laminate was extruded through a T die having a width of 750 mm to obtain a foamed sheet in the same manner as in Example 3.

### EXAMPLE 7

The resin materials of three kinds as prepared in Example 6 were laminated into a 3-layered structure in the same manner as in Example 6. The same filler-containing polyolefin resin material and homopolypropylene as used in Example 4 were melt kneaded in respective extruders having a diameter of 40 and successively extrusion laminated on the blowing agent-containing polyolefin resin side of the 3-layered structure in the order described. The thus formed 5-layered laminate was extruded through a T die having a width of 750 mm to obtain a foamed sheet in the same manner as in Example 3.

### COMPARATIVE EXAMPLE 1

A sheet was obtained in the same manner as in Example 1, except for replacing the resin of the blowing agent-containing polyolefin resin material with homopropylene (Novatec Polypro EA9, produced by Japan Polychem Corporation; melt index: 0.5 g/10 min).

### COMPARATIVE EXAMPLE 2

A sheet was obtained in the same manner as in Example 3, except that the polytetrafluoroethylene filler was not added.

### COMPARATIVE EXAMPLE 3

A sheet was obtained in the same manner as in Example 4, except that the polytetrafluoroethylene was not added to the blowing agent-containing polyolefin resin and that the polyolefin resin of the filler-containing polyolefin resin material was replaced with homopolypropylene (Novatec Polypro FY4, produced by Japan Polychem Corporation).

The structure of the foamed sheets obtained in Examples 1 to 4 and Comparative Examples 1 to 3 is shown in Table 1. The foamed cell state, the appearance and other physical properties of these sheets were evaluated as follows. The results obtained are shown in Table 2 below.

In Table 1, PEC stands for a propylene-ethylene block copolymer; PP, homopolypropylene; CMP, a polypropylene adhesive resin; and EVOH, an ethylene-vinyl alcohol copolymer. The melt tension and η(0.01)/η(100) are values measured on the portion of a material of a foamed layer exclusive of a blowing agent.

### (1) Foamed State

A section of about 10 to 20 µm in thickness was sliced off the sheet in the direction perpendicular to the resin flow with a microtome. The section was observed under an optical microscope, photographed, and evaluated as follows.
- ⊙⃝: Fine and uniform closed cells
- ○: Closed cells
- △: Some open cells are observed.
- x: Most cells are open.

### (2) Sheet Appearance

The surface of the sheet was observed with the naked eye and rated as follows.
- ⊙⃝: Smooth
- ○: Almost smooth
- x: Rough

### (3) Modulus in Three-Point Bending

Measured in accordance with JIS-K7203.

### (4) Screw End Pressure of Foamed Layer

The reading taken of the resin pressure gauge set at the front end of the screw.

### (5) Load on Extruder

The electrical current imposed on the motor of the extruder.

### (6) Resin Temperature of Foamed Layer

The reading taken of the resin thermometer set at the front end of the extruder.

**TABLE 1**

| | Composition (part by weight) | | | | | | | | | | Melt Tension | η(0.01) /η(100) |
|---|---|---|---|---|---|---|---|---|---|---|---|---|
| | Foamed Layer | | Non-foamed Layer 1 | | | | Non-foamed Layer 2 | | | | | |
| Example 1 | PEC | 100 | - | | | | - | | | | 6.0 | 55 |
| | blowing agent | 1.5 | | | | | | | | | | |
| Example 2 | PP | 100 | - | | | | - | | | | 10.0 | 55 |
| | blowing agent | 1.5 | | | | | | | | | | |
| Example 3 | PP | 100 | - | | | | - | | | | 13.0 | 80 |
| | PTFE | 0.3 | | | | | | | | | | |
| | blowing agent | 1.5 | | | | | | | | | | |
| Example 4 | do. | | PEC | | 60 | | PP | | 100 | | 13.0 | 80 |
| | | | talc | | 40 | | | | | | | |
| Example 5 | PP | 100 | EC9 | | 60 | | do. | | | | 13.0 | 80 |
| | PTFE | 0.3 | talc | | 40 | | | | | | | |
| | blowing agent | 2.5 | | | | | | | | | | |
| Compara. Example 1 | PP | 100 | - | | | | - | | | | 10.0 | 45 |
| | blowing agent | 1.5 | | | | | | | | | | |
| Compara. Example 2 | PP | 100 | - | | | | - | | | | 2.5 | 20 |
| | blowing agent | 1.5 | | | | | | | | | | |
| Compara. Example 3 | PP | 100 | PP | | 60 | | PP | | 100 | | 2.5 | 20 |
| | blowing agent | 1.5 | talc | | 40 | | | | | | | |

| | Foamed Layer | | Non-foamed Layer 3 | | Non-foamed Layer 4 | | Non-foamed Layer 1 | | Non-foamed Layer 2 | | | |
|---|---|---|---|---|---|---|---|---|---|---|---|---|
| Example 6 | PP | 100 | CMP | 100 | EVOH | 100 | - | | - | | 13.0 | 80 |
| | PTFE | 0.3 | | | | | | | | | | |
| | blowing agent | 1.5 | | | | | | | | | | |
| Example 7 | PP | 100 | CMP | 100 | EVOH | 100 | EC9 | 60 | PP | 100 | 13.0 | 80 |
| | PTFE | 0.3 | | | | | talc | 40 | | | | |
| | blowing agent | 1.5 | | | | | | | | | | |

**TABLE 2**

| | Expansion Ratio of Foamed Layer | Foamed Cell State | Sheet Appearance | Modulus in 3-Point Bending (kgf/cm²) | Screw End Pressure (kg/cm²) | Load on Extruder (A) | Resin Temp. (°C) |
|---|---|---|---|---|---|---|---|
| Example 1 | 2.0 | ○ | ○ | 6500 | 320 | 50 | 200 |
| Example 2 | 2.3 | ○ | ○ | 6500 | 300 | 50 | 200 |
| Example 3 | 2.5 | ⊙⃝ | ⊙⃝ | 6000 | 290 | 51 | 200 |
| Example 4 | 3.5 | ⊙⃝ | ⊙⃝ | 31000 | 310 | 51 | 200 |
| Example 5 | 4.0 | ○ | ⊙⃝ | 28000 | 300 | 50 | 50 |
| Compara. Example 1 | 2.0 | ○ | ○ | 6000 | 400 | 70 | 230 |
| Compara. Example 2 | 1.5 | x | x (gas escape) | 8000 | 280 | 50 | 200 |
| Compara. Example 3 | 1.7 | x | x (gas escape) | 22000 | 290 | 51 | 200 |
| Example 6 | 3.0 | ⊙⃝ | ⊙⃝ | 12000 | 290 | 50 | 200 |
| Example 7 | 4.0 | ⊙⃝ | ⊙⃝ | 3100 | 300 | 50 | 200 |

### Industrial Applicability:

As is apparent from the results in Table 2, a foamed sheet having an improved closed-cell structure can be obtained at an increased expansion ratio with improved extrusion moldability by using a resin material having a high melt tension and great non-Newtonian properties as compared with an extruded foamed sheet prepared from a generally employed material.

Where a non-foamed layer is laminated on the foamed layer to obtain a multi-layered sheet, the expansion ratio can be increased to achieve both lightness in weight and high rigidity as compared with single layer extrusion foaming.

## Claims

1. A polyolefin resin material for foam molding which mainly comprises a polyolefin resin and is to be mixed with a blowing agent to provide a foaming material, which is characterized by having a melt tension of 5 to 20 g at 190°C and a viscosity ratio of dynamic melt viscoelasticity at a circular frequency of 0.01 rad/s [η(0.01)] to dynamic melt viscoelasticity at a circular frequency of 100 rad/s [η(100)], i.e., η(0.01)/η(100), of 50 or more.

2. The polyolefin resin material for foam molding according to claim 1, which mainly comprises homopolypropylene or a propylene-ethylene block copolymer.

3. The polyolefin resin material for foam molding according to claim 1, which further comprises polytetrafluoroethylene.

4. The polyolefin resin material for foam molding according to claim 1, which comprises a polyolefin resin material having a melt tension of 1 to 20 g at 190°C and polytetrafluoroethylene.

5. A foamed sheet characterized by comprising a polyolefin resin material which has a melt tension of 5 to 20 g at 190°C and a viscosity ratio of dynamic melt viscoelasticity at a circular frequency of 0.01 rad/s [η(0.01)] to dynamic melt viscoelasticity at a circular frequency of 100 rad/s (η(100)], i.e., η(0.01)/η(100), of 50 or more.

6. A laminated foamed sheet having a foamed layer and a non-foamed layer in contact with said foamed layer, characterized in that said foamed layer comprises a polyolefin resin material which has a melt tension of 5 to 20 g at 190°C and a viscosity ratio of dynamic melt viscoelasticity at a circular frequency of 0.01 rad/s [η(0.01)] to dynamic melt viscoelasticity at a circular frequency of 100 rad/s [η(100)], i.e., η(0.01)/η(100), of 50 or more.

7. The laminated foamed sheet according to claim 6, wherein said polyolefin resin material comprises a polyolefin resin and a polytetrafluoroethylene filler.

8. The laminated foamed sheet according to claim 6, wherein said non-foamed layer is made of a non-foaming resin material comprising a polyolefin resin and a filler.

9. The laminated foamed sheet according to claim 6, wherein said non-foamed layer is a resin layer having a non-polyolefin resin layer and an adhesive resin layer provided in between said non-polyolefin resin layer and said foamed layer for the purpose of adhesion.

10. A laminated foamed sheet according to claim 9, which has a non-foamed layer having the structure according to claim 9 on one side thereof and a non-foamed layer comprising a polyolefin resin on the other side.

11. The laminated foamed sheet according to claim 9, wherein said non-foamed layer further has a polyolefin resin layer on the outer side of said non-polyolefin resin layer and/or between said non-polyolefin resin layer and said foamed layer via an adhesive resin.

12. The laminated foamed sheet according to claim 8, wherein said polyolefin resin material comprises a resin having gas barrier properties and an adhesive resin.

13. A process for producing a foamed sheet characterized by comprising mixing the polyolefin resin material for foam molding according to any one of claims 1 to 4 and a blowing agent and melt extruding the mixture from a die into sheeting.

14. A process for producing a laminated foamed sheet having a foamed layer and a non-foamed layer in contact with said foamed layer, which comprises the step of melt extruding (a) a mixture comprising the polyolefin resin material for foam molding according to any one of claims 1 to 4 and a blowing agent and (b) a non-foaming resin material mainly comprising a polyolefin resin and not containing a blowing agent from a die into sheeting to form the foamed layer and the non-foamed layer in contact with the foamed layer.

15. The process for producing a laminated foamed sheet according to claim 14, wherein said non-foaming resin material comprises the polyolefin resin and a filler.

16. A process for producing a laminated foamed sheet having a foamed layer and a non-foamed layer in contact with said foamed layer, which comprises the step of melt extruding (a) a mixture comprising the polyolefin resin material for foam molding according to claim 1 and a blowing agent and (c) a non-foaming resin material mainly comprising a non-polyolefin resin and containing no blowing agent from a die into sheeting with an adhesive resin layer which adheres the two materials being laminated therebetween to form the foamed layer and the non-foamed layer in contact with the foamed layer.
